# EUROPEAN PATENT APPLICATION

(11) **EP 0 752 782 A1**
(43) Date of publication of application: **08.01.1997**
(21) Application number: 95201864.6
(22) Date of filing: 07.07.1995
(51) Int. Cl.: H04N 1/047

(54) **Adjustment of the position of a scan line in a light beam scanning apparatus**

(71) Applicant: AGFA-GEVAERT naamloze vennootschap, B-2640 Mortsel (BE)
(72) Inventor: Exelmans, Walter, c/o Agfa-Gevaert N.V., B-2640 Mortsel (BE)

(57) **Abstract**

Deviation of the position of a scan line relative to a reference position is determined by means of a single light-sensitive detector. The position is adjusted, if required. Suitable detectors are a split PIN diode, a Wallmark diode or a light-sensitive device, preferably a PIN diode, the light-sensitive surface of which has been covered by means of a density wedge.

## Description

### 1. Field of the invention.

The present invention relates to an apparatus for line-wise scanning an image with a light beam.

The invention more specifically relates to accurate control of the position of a scan line in such a light beam scanning apparatus.

### 2. Background of the invention

In the field of digital radiography a technique has been developed wherein a radiation image, for example x-rays transmitted by an object, is stored in a screen comprising a photostimulable phosphor.

Examples of the stimulable phosphor employable in the radiation image storage panel of the present invention include
SrS:Ce, Sm, SrS:Eu, Sm, ThO₂:Er, and La₂O₂S:Eu, Sm, as described in U.S. Patent N°.3,859,527;
ZnS:Cu,Pb, BaO.xAl₂O₃:Eu, in which x is a number satisfying the condition of 0.8 ≦ x ≦ 10, and M²⁺OxSiO₂:A, in which M²⁺ is at least one divalent metal selected from the group consisting of Mg, Ca, Sr. Zn, Cd and Ba, A is at least one element selected from the group consisting of Ce, Tb, Eu, Tm, Pb, Tl, Bi and Mn, and x is a number satisfying the condition of 0.5 ≦ x ≦ 2.5, as described in U.S. Patent N°. 4,326,078;
M^{III}OX:xCe, in which M^{III} is at least one trivalent metal selected from the group consisting of Pr, Nd, Pm, Sm, Eu, Tb, Dy, Ho, Er, Tm, Yb and Bi; X is at least one element selected from the group consisting of Cl and Br; and x is a number satisfying the condition of 0 ≦ x ≦ 0.1, as described in Japanese Patent Provisional Publication N°. 58(1983)-69281;
LnOX:xA, in which Ln is at least one element selected from the group consisting of La, Y, Gd and Lu. X is at least one element selected from the group consisting of Cl and Br, A is at least one element selected from the group consisting of Ce and Tb, and x is a number satisfying the condition of 0 ≦ x ≦ 0.1, as described in the above-mentioned U.S. Patent N°. 4,236,078;
(Ba₁₋ₓ,M^{II}ₓ)FX:yA in which M^{II} is at least one divalent metal selected from the group consisting of Mg, Ca, Sr, Zn and Cd, X is at least one element selected from the group consisting of Cl, Br and I, A is at least one element selected from the group consisting of Eu, Tb. Ce, Tm, Dy, Pr. Ho, Nd, Yb and Er, and x and y are numbers satisfying the conditions of 0 ≦ x ≦ 0.6 and 0 ≦ y ≦ 0.2 respectively, as described in US-P 4,239,968.
Bariumfluorohalide phosphors as disclosed in, e.g., US P 4.239.968, DE OS 2 928 245, US-P 4 261 854, US-P 4 539 138, US P 4.512.911, EP 0 029 963, US-P 4 336 154, US-P 5 077 144, US-P 4 948 696,Japanese Patent Provisional Publication N°. 55(1980)-12143, Japanese Patent Provisional Publication N°. 56(1981)-116777, Japanese Patent Provisional Publication N°. 57(1982)-23675, US-P 5 089 170, US-P 4 532 071, DE OS 3 304 216, EP 0 142 734, EP 0 144 772, US-P 4 587 036, US-P 4 608 190, and EP 0 295 522.
Ba₁₋ₓSrₓF_{2-a-b}X_{b}:zA, wherein X is at least one member selected from the group consisting of Cl and I; x is in the range 0.10 ≦ x ≦ 0.55; a is in the range 0.70 ≦ a ≦ 0.96; b is in the range 0 ≦ b ≦ 0.15; z is in the range 10⁻⁷ ≦ z ≦ 0.15, and A is Eu²⁺ or Eu²⁺ together with one or more of the co-dopants selected from the group consisting of Eu³⁺, Y, Tb, Ce, Tm, Dy, Pr, Ho, Nd, Yb, Er, La, Gd and Lu, and wherein fluorine is present stoichiometrically in said phosphor in a larger atom % than bromine taken alone or bromine combined with chlorine and/or iodine, as disclosed in EP 345 903.
Alkali metal phosphors comprising earth alkali metals as disclosed in e.g. US-P 5,028,509 and EP 0 252 991.
Halosilicate phosphors as disclosed in, e.g. ,EP 304 121, EP 382 295 and EP 522 619.

The above-described stimulable phosphors are given by no means to restrict the stimulable phosphor employable in the present invention. Any other phosphor can be also employed, provided that the phosphor gives stimulated emission when excited with stimulating rays after exposure to a high energy radiation.

The technique for reading out the stored radiation image consists of scanning the screen with stimulating radiation, such as laser light of the appropriate wavelength, detecting the light emitted upon stimulation and converting the emitted light into an electric representation. This technique further comprises digitizing and processing said electric signal. The processed electric signal can then be applied to a recorder for recording a hard copy for example on film or can be applied to a monitor for display of the corresponding visual image.

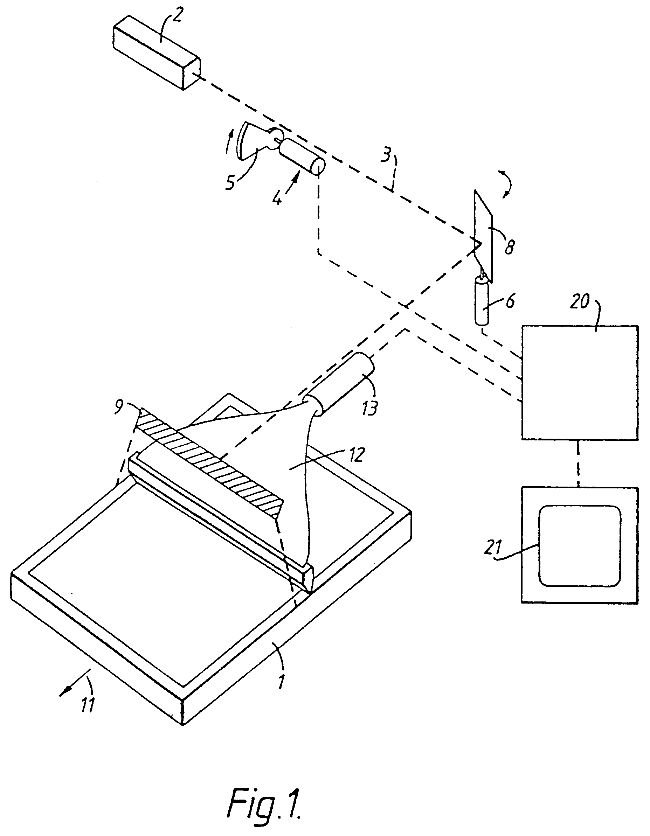

The read out technique is performed in a read-out apparatus such as the read out apparatus illustrated in figure 1.

The illustrated read out apparatus comprises a laser for generating stimulating irradiation and means for deflecting laser light and for directing the light onto the screen wherein the radiation image has been stored.

In the illustrated embodiment the laser beam 3 emitted by laser 2. is deflected in the main scan direction by a galvanometer mirror 8 and by a plain reflection mirror 9 onto the phosphor screen 1.

The scanning movement in the sub-scan direction is obtained by transporting the screen in a direction perpendicular to the main scan direction. The apparatus comprises transport means (not shown) to transport the screen in the direction of the arrow 11, to enable the whole sheet to be scanned in a uniform manner.

Light emitted upon stimulation is guided by a light collector 12 onto a photomultiplier 13.

The sensitivity of the system that is used to collect the stimulated emission is a function of the position of the laser scan line with respect to the light collector.

It is important therefore that the laser scan line position is always the same.

Because of thermal and mechanical stresses of the whole optical system, the laser scan line may drift in the slow-scan direction (also called the auxiliary scan direction), resulting in a deterioration of the image quality.

US 4.882.490 relates to a light beam scanning apparatus for read out of a stimulable phosphor screen having two detectors the signal ratios of which indicate the main scanning position.

The light beam scanning apparatus includes first and second light detectors such as photodiodes juxtaposed in the main scanning direction and having light detecting surfaces extending in the auxiliary scanning direction.

The first and second light detectors produce respective output signals at predetermined ratio when the light beam for scanning the object in the main scanning direction is in a reference main scanning position, and produce respective output signals at a ratio that varies from the predetermined ratio when the light beam has deviated from the reference main scanning position.

The main scanning position of the light beam with respect to the object can be detected from the ratio of the output signals of the first and second light detectors.

Three embodiments have been described in this patent specification.

In a first embodiment the light detecting surface of a first light detecting means is partially shielded with a light shielding platen that has one edge extending in the reference scan line direction. A second detector is spaced a distance from the first detector and is aligned with the first detector, its light detecting surface however has not been shielded. The light detectors are photodiodes or phototransistors.

For example, half of the light detecting surface of one detector is shielded so that the ratio of the output peak values of the detectors is 1:2 when a scan line is in the reference position and is not equal to said ratio when the scan line is out of the reference position.

In a second embodiment a light shielding plate is mounted in a substantially symmetrical way on both detectors so that the ratio of the output signals of the photodiodes is 1:1 when the line is in a reference position.

In a third embodiment the light detecting surfaces of first and second detectors are differently positioned with respect to the auxiliary scanning position so that also in this configuration the ratio of the output signals of the photodetectors is a predefined ratio when the scan line is in a reference position.

The prior art system is complex, it always uses a set of two photodetectors that need to have identical conversion characteristics.

The detectors have to be very accurately mounted and have to be aligned relative to eachother and relative to the scan direction.

### 3. Objects of the present invention

It is an object of the present invention to provide a light beam scanning system wherein the scanning position in the sub-scan direction can be accurately controlled.

It is a further object to provide a system of the above named kind wherein the position of the scan-line in the sub-scan direction can be measured and wherein that position can be adjusted in case of drift.

It is a still further object of this invention to provide such a system that is simple, easy to mount and to adjust and that does not have the drawbacks of the prior art systems.

Still further objects will become apparent from the description hereafter.

### 4. Statement of the invention

The objets of the present invention are achieved by a light beam scanning apparatus for scanning an object by applying a light beam deflected in a main scanning direction to the object while moving said object in a sub-scanning direction perpendicular to said main scanning direction, said light beam scanning apparatus comprising
- a single light-sensitive detector for detecting the position of a scan line in the sub-scanning direction,
- means for determining the deviation of the detected position from a reference position;
- means for adjusting the position of a scan line in the sub-scanning direction on the basis of the determined deviation so as to align with said reference position.

The system of the present invention is advantageous in that only a single detector is to be used whereas the prior art solution comprises two detectors. The embodiment according to the present invention is simple and very accurate.

The mounting and adjustment of the single detector used in the present invention is less complicated than the mounting and adjustment of the pair of detectors used in the prior art system.

Various embodiments of suitable detectors for detecting the position of a scan line in the system of the present invention, can be selected.

In one embodiment the detector comprises a split PIN diode and an associated differential amplifier. A split PIN diode is a PIN diode featuring two sensing compartments. Each of the compartments generates an output signal when its light sensitive surface is irradiated with a light spot. The output signal corresponds with the amount of light energy detected by the PIN diode compartment.

The split PIN diode is positioned so that the boundary between the two compartments is substantially aligned with the main scan direction.

The difference of the output signals of the split PIN diode is generated by applying the output signals of each of the compartments of the split PIN diode to a differential amplifier. The output signal of the differential amplifier gives an indication of the position of the light spot relative to the boundary between the individual compartments of the split PIN diode.

In an alternative embodiment the detector is light sensitive device that generates a single output signal that is proportional to the position of the light illuminating the light sensitive surface of the detector.

An example of such a device is the Wallmark diode. A Wallmark diode is known in the art and is e.g. produced by UDT-Sensors Inc., California, U.S.A.

The inventors have developed another embodiment of a detector that generates an output signal that is proportional to the position of a light spot falling on its light sensitive surface.

This detector comprises a light-sensitive element having a density wedge covering its light sensitive surface.

Several light-sensitive devices can be used such as a light-sensitive diode, a phototransistor, etc.

A PIN diode is a preferred light-sensitive sensor because it has a light-to-electric current conversion characteristic that is substantially linear. Further, the dimensions of the light-sensitive area of this kind of diodes are adequate (large enough) for the present application.

A density wedge is for example applied by evaporation to a glass substrate. Alternatively the glass substrate can be coated. Still other alternatives are possible and are for example known in photographic art.

The output of the PIN diode is proportional to the light amount falling on the surface of the diode. Since this surface has been covered by a density wedge that is characterised in that the amount of light transmitted by the wedge depends on the position of the \light spot on the wedge, the output of the diode will likewise depend on the position of the spot.

The detector is preferably mounted as follows.
In case of the first embodiment, more specifically the split PIN diode, the diode is positioned so that the boundary between the two compartments is aligned with the main scan direction being the direction that is followed by the center of the scanning light spot when the light is deflected in the main scanning direction.

When the scan line is in the reference position, the output signal generated by the differential amplifier to which the output signals of each of the compartments of the split PIN diode are applied, will be equal to a reference signal.

Alternatively the position of the split PIN diode can be adjusted so that the output signal of each of the compartments are identical and the output signal of the differential amplifier is zero.

When performing an actual measurement of the scan line position, the actual output signal of the differential amplifier is compared with the reference signal so as to determine a signal representative of the deviation of the actual scan line position from the reference position.

In case the other embodiments of the detector, namely the Wallmark diode and the PIN diode covered by a density wedge, are applied the output signal of the detector is first generated with the scan line being adjusted so that it is positioned in a reference position. Then, the actual scan line position is detected by comparing the signal generated at the output of the diode with the reference signal.

Although the above described types of detectors are very convenient for the purpose of position sensing they suffer from the fact that the output signal depends on the intensity of the spot falling on the detector.

So, in cases where the spot intensity drifts between reference measurement and the effective position detection of a scan line. this may result in misinterpretation of the results.

In other words, it may happen that a different output signal is generated due to a difference of the light intensity falling on the detector being caused by drift of the power of the scanning light source rather than due to drift of the scan line position relative to a reference position.

It is therefore desirable to provide additionally means for measuring the output power of the laser and means for applying to the output signal of the differential amplifier a correction factor indicative of the measured laser power.

The present invention has been specifically designed for application in a read out system for reading a radiation image that has been stored in a photostimulable phosphor screen.

It is however applicable to other kinds of line wise scanning systems that can either be used for read out, such as film scanning systems or document scanning systems, or for reproduction such as printers or type setters.

### 5. Brief description of the drawings

Particular aspects of the present invention as well as preferred embodiments thereof will be explained by means of the corresponding drawings wherein
Fig. 1 is a general view of a system in which the method of the present invention can be applied,
Fig. 2 shows a support platen carrying the phosphor screen during the scanning,
Fig. 3 shows an electronic equivalent circuit of a PIN diode and an electronic circuit for processing the output signals of the PIN diode,
Fig. 4 shows the output signal generated by a split PIN diode when
   (a) the scan line is in a reference position,
   (b) and (c) the scan line is out of the reference position,
Fig. 5 shows the output signal generated by a Wallmark diode when
   (a) the scan line is in a reference position,
   (b) and (c) the scan line is out of the reference position,
Fig. 6 is an illustration of an embodiment of a light sensitive detector.

### 6. Detailed description of the drawings

In Figure 1, an apparatus for reading a radiation image that has been stored in a photostimulable phosphor screen is shown.

After a stimulable phosphor sheet 1 is exposed to radiation, such as to X-rays, passing through an object to have a radiation image stored thereon, it is sent to the read-out station shown in Figure 1. A laser beam 3, having a wavelength of between 500 and 700 nanometer, for example a 633 nm light beam emitted from a helium-neon laser source 2, is directed towards a galvanometer mirror 8. Drive means 6 cause the galvanometer mirror to reciprocate in a triangular wave pattern. A light chopper 4, including a rotating disc segment 5, is positioned to enable the disc segment to interrupt the laser beam pathway during the galvanometer retrace step.

Various laser beam focusing devices, known in the art, not shown in the drawings, ensure a uniform beam diameter during scanning of the beam on the phosphor sheet and also ensure that the uniform angular velocity of the reciprocating mirror 8 results in the laser spot travelling across the phosphor sheet at a uniform linear speed. The laser beam 3 is one-dimensionally deflected in the main scanning direction by the galvanometer mirror 8 and by a plane reflection mirror 9 onto the phosphor sheet 1. The arrangement is such that a spot of laser light, having a full width at half maximum of 60 µm scans the phosphor sheet at a main scanning speed of 35 m/sec, and a retrace speed of 300 m/sec. Transport means not shown are provided to transport the screen 1 at a uniform speed of 12.5 mm/sec in the sub-scan direction indicated by means of the arrow 11, to enable the whole sheet to be scanned in a uniform manner.

Positioned close to, but behind the scanning line of the laser beam 3 on the phosphor sheet 1, is a light guide 12 which receives light emitted from the phosphor sheet 1 but is shielded from direct exposure to the laser beam 3. The output end of the light guide 12 is positioned adjacent a photo-detector 13, which produces an electrical signal dependent upon the light intensity falling thereon.

Suitable electrical connections are made to pass the output signal from the photo-detector 13 to a computer 20 which serves to control the light chopper 4 and the galvanometer mirror drive 6 and is additionally connected to a display unit 21, such as a VDU screen. Alternatively or additionally the output of the computer 20 is used to produce a permanent record of the image.

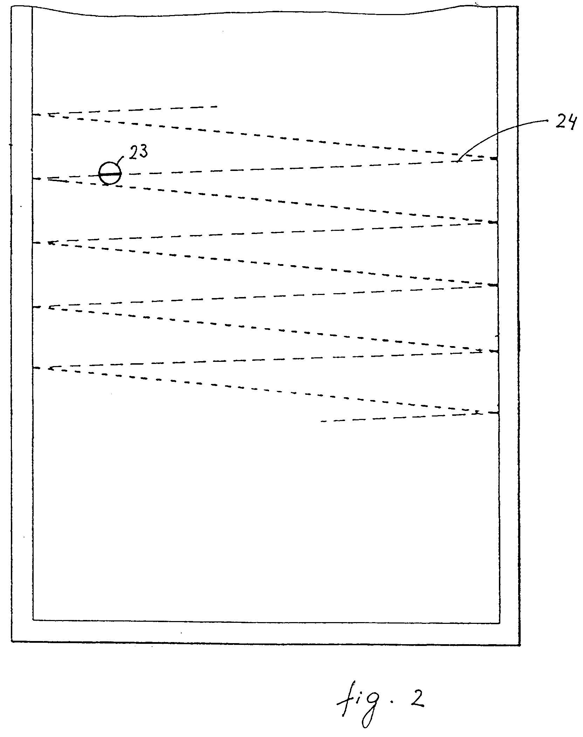

Figure 2 shows a support platen carrying the phosphor screen during the scanning.

According to this invention, a light sensitive detector such as split PIN diode 23 is positioned in the main scan direction 24, i.e. in the direction of deflection of the light beam by the galvanometric mirror. The boundary between the two compartments of the diode is aligned with the fast scan direction.

In this embodiment the detector is covered by the photostimulable phosphor screen during the scanning movement.

In an alternative embodiment (not shown) a beam splitter is provided in the light path of the beam of stimulating laser light so that part of the emitted laser light, for example about 10 %, is deflected by the beam splitter. In the light path of the beam deflected by the beam splitter the light-sensitive detector is positioned in the focus of the laser beam.

This embodiment is advantageous because measurement and adjustment can be performed during the scanning of the photostimulable phosphor screen since the detector is not covered by the screen during the scanning.

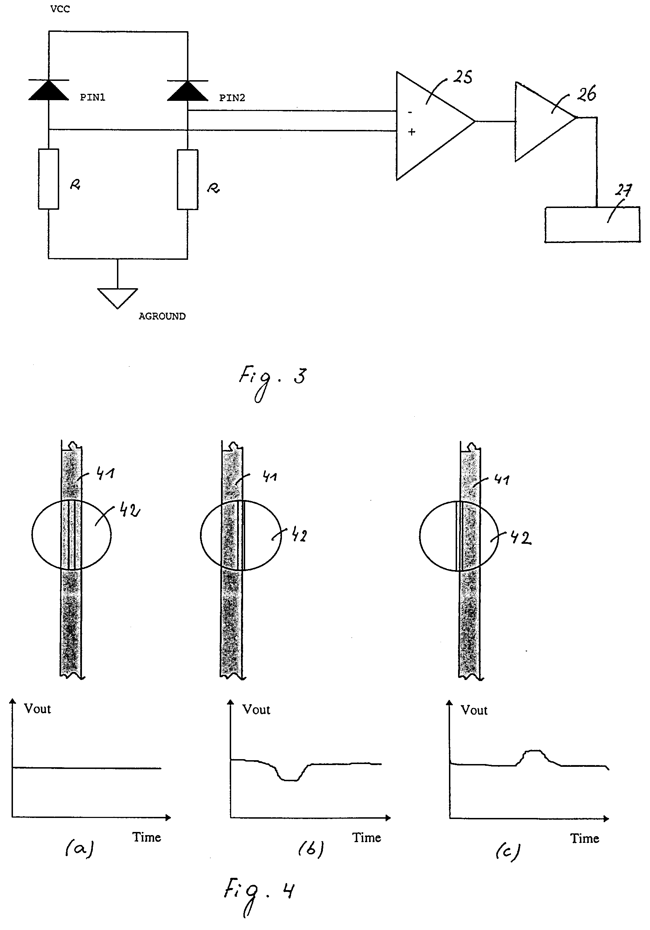

The apparatus further comprises a differential amplifier 25 to which the output of each of the compartments of the split PIN is applied. The output signal of the differential amplifier is then digitized in analog-to-digital convertor 26 and stored in memory 27. This is illustrated in figure 3.

The apparatus according to the invention works as follows.

First a reference signal REF corresponding with a reference position of the scanning line is generated by mounting the split PIN diode detector so that the boundary between its compartments is aligned with the reference scanning line.

Then, the output signals PD1_{ref} and PD2_{ref} of the split PIN diode are fed to a differential amplifier 25 to determine the signal REF, being the difference of output signals PD1 and PD2 when the scan line is in a reference position. This signal is digitized in analog-to-digital convertor 26 and stored in memory 27.

Then, during normal operation of the read out apparatus, the difference of PD1 and PD2 is determined, and this difference is digitized and compared with the reference signal value.

When the actual difference signal is not equal to the reference signal, this means that the position of the scan line in the main scan direction has drifted compared with the reference position.

Then, the mirror 9 is tilted around its axis so as to adjust the position of the scan line until the scan line is in the reference position and hence the output of the differential amplifier is equal to the signal REF.

The above described method does not take into account any deviations of the laser power in between the reference measurement and the actual position detection.

To measure the laser power, a laser power detector can be positioned in the light path of the laser beam emitted by the laser 2.

Means are then to be provided to multiply the measured signal with a factor corresponding with the laser power.

Figure 4 illustrates the output signals when a split PIN diode and an associated differential amplifier are used as light sensitive position detector. A scan line is indicated by numeral 41, the light sensitive area of a split PIN diode is indicated by numeral 42.

In figure 4(a) the scan line is in a reference position, in figures 4(b) and 4(c), the scan line is out of the reference position.

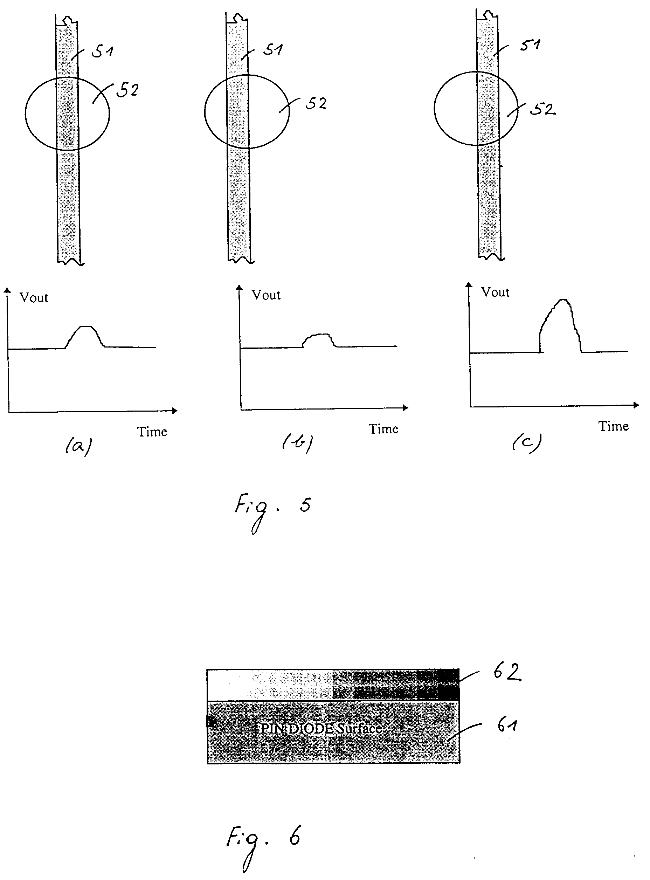

Figure 5 illustrates the output signals when a Wallmark diode is used as position detector. A scan line is indicated by numeral 51, the light sensitive area of a split PIN diode is indicated by numeral 52.
In figure 5(a) the scan line is in a reference position, in figures 5(b) and 5(c), the scan line is out of the reference position.

Figure 6 is a schematic illustration of a third embodiment of a light sensitive detector. The detector is composed of a PIN diode 61 on top of which a density wedge 62 has been attached. The density wedge is coated or evaporated onto a glass substrate.

## Claims

1. A light beam scanning apparatus for scanning an object by applying a light beam deflected in a main scanning direction, to the object while moving said object in a sub-scanning direction perpendicular to said main scanning direction, said light beam scanning apparatus comprising
- a single light-sensitive detector for detecting the position of a scan line in the sub-scanning direction,
- means for determining the deviation of the detected position from a reference position,
- means for adjusting the position of a scan line in the sub-scanning direction on the basis of said determined deviation so as to align with said reference position.

2. An apparatus according to claim 1 wherein
- said detector for detecting the position of a scan line in the sub-scanning direction comprises a split PIN diode comprising two compartments, said PIN diode being positioned along the main scan direction so that the boundary between said compartments extends in the main scanning direction, and a differential amplifier to which the output signals of each of the compartments of the split PIN diode are applied and wherein
- said means for determining the deviation of this detected position from a reference position comprise means for comparing the output signal of said differential amplifier with a predefined output signal of said differential amplified obtained when the scan line is in a reference position.

3. An apparatus according to claim 1 wherein said detector for detecting the position of a scan line in the sub-scan direction is a detector that renders an output value proportional to the position of the light illuminating its surface.

4. An apparatus according to claim 3 wherein said detector is a Wallmark diode.

5. An apparatus according to claim 3 wherein said detector is a PIN diode having a linear density wedge attached to its light sensitive surface.

6. An apparatus according to claim 1 wherein said means for adjusting the position of a scan line in the sub-scanning direction on the basis of said determined deviation comprise an elongated mirror and associated means for rotating the mirror on its axis so as to change the position of a scan line in the sub-scanning direction.

7. An apparatus according to claim 1 wherein said object comprises a photostimulable phosphor screen that has been exposed to a radiation image and said light beam scanning apparatus comprises means for generating a beam of stimulation radiation, means for directing said stimulating irradiation towards said screen, means for deviating said stimulating radiation in said main scanning direction and means for transporting said screen in said sub-scanning direction.

8. A position detector comprising (i) a light-sensitive device and (ii) a density wedge covering the surface of said light-sensitive device.

9. A position detector according to claim 8 wherein said light-sensitive device is a PIN diode.
